# EUROPÄISCHE PATENTSCHRIFT

(11) **EP 2 058 188 B1**
(45) Veröffentlichungstag und Bekanntmachung des Hinweises auf die Patenterteilung: **19.01.2011**
(21) Anmeldenummer: 08168057.1
(22) Anmeldetag: 31.10.2008
(51) Int. Cl.: B60T 7/20, B60T 13/66, B60T 13/68, B60T 17/22

(54) **Steueranlage für Kraftfahrzeug-Anhänger mit Betriebsbremse, Feststellbremse und Luftfederung**
Control system for vehicle trailers with service brake, parking brake and air suspension
Installation de commande pour remorques de véhicules automobiles dotées d'un frein de stationnement, frein de stationnement et ressort à air

(30) Priorität: 12.11.2007 DE 102007053766
(43) Veröffentlichungstag der Anmeldung: 13.05.2009
(73) Patentinhaber: Haldex Brake Products GmbH, 69123 Heidelberg (DE)
(72) Erfinder: Sulzyc, Georg, 68535 Edingen-Neckarhausen (DE)
(74) Vertreter: Rehberg Hüppe + Partner

(56) Entgegenhaltungen:
- EP-A- 0 520 147
- WO-A-2008/083801
- GB-A- 2 192 157

## Beschreibung

Die Erfindung betrifft eine Steueranlage für Kraftfahrzeug-Anhänger mit Betriebsbremse, Feststellbremse und Luftfederung gemäss dem Obergriff des Anspruchs 1. Eine solche Steueranlage ist aus der WO 2008/083801 bekannt. Es wird gleichzeitig ein Verfahren zum Betreiben einer Steueranlage für Kraftfahrzeug-Anlanger aufgezeigt.

Luftgefederte Anhänger verfügen außer den mit Druckluft versorgten Luftfederbälgen üblicherweise auch über eine Betriebsbremse und eine Hilfsbremse. Die Betriebsbremse arbeitet mit einem Steuerventil, welches beispielsweise als EBS-Einheit ausgebildet ist, und verfügt über Betriebsbremszylinder. Die Feststellbremse besitzt üblicherweise ein Feststellbremsventil, mit dem bei manueller Betätigung Feststellbremszylinder-Einheiten, vorwiegend in der Form von separaten oder kombinierten Federspeicherbremszylindern, betätigt werden können.

An einem abgestellten Anhänger ergibt sich oft aufgrund von Undichtigkeiten in der pneumatischen Anlage die Notwendigkeit, die gesamte Anlage vor Beginn einer Fahrt mit Druckluft aufzufüllen und in einen betriebsbereiten Zustand zu versetzen. Dies geschieht in aller Regel über einen Lastkraftwagen, also ein Zugfahrzeug, welches mit einem Kompressor und einer entsprechenden Luftaufbereitungsanlage ausgestattet ist. Der Anhänger wird über die Vorratsleitung mit Druckluft versorgt. Für Anhänger, die über eine Betriebsbremse, eine Feststellbremse und eine Luftfederung verfügen, ist es wesentlich, dass die Betriebsbremse zunächst in einen fahrbereiten Zustand überführt wird, also aufgefüllt wird. Dies zielt darauf ab, auf jeden Fall sicherzustellen, dass nach dem Anfahren eine Betriebsbremsung möglich ist. Auch der Hilfs- oder Feststellbremse wird eine gewisse Bedeutung eingeräumt, so dass das Lösen der Feststellbremse durch Beaufschlagung der Federspeicherbremszylinder erst dann möglich ist, wenn der betreffende Teil der Anlage mit Druckluft versorgt ist. Ist dies der Fall, kann die Hilfsbremse gelöst werden, so dass das Fahrzeug hinweggefahren werden kann. Der dritte Teil der pneumatischen Anlage ist in der Luftfederung zu sehen. Auch dieser Teil der Anlage muss in einen betriebsbereiten Zustand versetzt werden, in welchem das Fahrgestell des Anhängers entsprechend der Beladung angehoben ist. Bei den bekannten Anhängern besteht die Möglichkeit, dass nach dem Erreichen des betriebsbereiten Zustandes der Betriebsbremse und der Hilfsbremse die Möglichkeit gegeben ist, den Anhänger mit dem Zugfahrzeug bereits hinwegzufahren, ohne dass das Fahrgestell des Anhängers mit Druckluft versorgt in die Fahrposition angehoben ist. Das Fahrgestell liegt vielmehr noch auf vorgesehenen Anschlägen auf und befindet sich damit auf einem niedrigeren Niveau als beabsichtigt. Bei diesem niedrigeren Niveau besteht die Möglichkeit, dass die Kotflügel des Anhängers mit den Reifenflanken der Räder in Kontakt kommen und dort einschneiden, so dass die Reifen zumindest beschädigt werden. Oft verfügt die Bremsanlage eines Anhängers über ein achslastabhängig gesteuertes Ventil, welches den in den Bremszylindern anzuwendenden Bremsdruck beeinflusst. Wenn ein Anhänger ohne Betriebsbereitschaft der Luftfederung hinweggefahren wird, ist in der zu den Luftfederbälgen führenden Leitung noch kein oder ein zu geringer Druck vorhanden. Dieser Druck beeinflusst dann das ALB-Ventil, welches insoweit nicht beladungsabhängig angesteuert wird. Dem hat man dadurch entgegengewirkt, dass ALB-Ventile mit einer Notfalleinstellung versehen wurden. Aber auch eine solche Notfalleinstellung stimmt in den seltensten Fällen mit dem tatsächlichen Beladungszustand des Anhängers überein, so dass die Bremsanlage mit unzutreffenden Signalen versorgt wird.

### STAND DER TECHNIK

Aus der EP 0 520 147 B1 ist eine Steueranlage zum willkürlichen Heben und Senken des Fahrzeugsaufbaus von luftgefederten Fahrzeugen mit Niveauregelung bekannt. Obwohl in dieser Druckschrift nur die Luftfederung dargestellt und beschrieben ist, versteht es sich, dass ein solches Fahrzeug auch eine Betriebsbremse und eine Feststellbremse aufweist. Es ist ein gesonderter Luftbehälter für die Luftfederung vorgesehen, dem ein Überströmventil ohne Rückströmung vorgeschaltet ist. Über diese Zweigleitung wird die Luftfederung mit Druckluft versorgt.

Aus der DE 199 28 113 C1 ist ein Anhängerbremsventil für den Einbau in Druckluftbremsanlagen von Anhängern mit ABS- und ALB-Steuerung bekannt. Hier ist das Anhängerbremsventil sowie die zugehörige Betriebsbremsanlage mit den Betriebsbremszylindern im Einzelnen dargestellt und verdeutlicht.

Aus der DE 602 08 804 T2 ist eine Druckluftverarbeitungsvorrichtung bekannt, die Druckluft von einem Kompressor erhält und an verschiedene Anlagenteile weitergibt. So besitzt die Druckluftverarbeitungsvorrichtung einen Auslass für die Speisung der Betriebsbremsanlage und einen Auslass für die Speisung einer Feststellbremsanlage (Parkbremse). Ähnlich können auch andere Systeme mit Druckluft versorgt werden, z. B. eine Luftfederanlage. Die Betätigungsorgane der verschiedenen Anlagen sind außerhalb der Druckluftverarbeitungsvorrichtung angeordnet. Jedoch ist an der Druckluftverarbeitungsvorrichtung eine elektronische Kontroll-und Steuereinheit vorgesehen, die integrierte Steuermittel enthält, um elektropneumatische Bauteile, z. B. eine als Versorgungsventil dienendes Magnetventil für die Feststellbremse, in Abhängigkeit von Informationen zu steuern. Auf diese Weise kann auch eine Drucküberprüfung der Versorgung der Betriebsbremse erfolgen, um ein Lösen der Feststellbremse zu verhindern, wenn die Betriebsbremse noch nicht einsatzbereit ist. Über einen Höhenmessfühler können der Steuerung der Luftfederanlage Informationen zur Verfügung gestellt werden.

### AUFGABE DER ERFINDUNG

Der Erfindung liegt die Aufgabe zugrunde, eine Steueranlage für Kraftfahrzeuganhänger der eingangs beschriebenen Art sowie ein Verfahren zum Betreiben einer solchen Steueranlage für Kraftfahrzeuganhänger aufzuzeigen, bei der die Gefahr, dass die Flanken der Reifen durch Kontakt zu den Kotflügeln beschädigt werden können, nicht mehr gegeben ist.

### LÖSUNG

Erfindungsgemäß wird dies bei einer Steueranlage des eingangs beschriebenen Art dadurch erreicht, dass die Betriebsbremse, die Feststellbremse und die Luftfederung gegeneinander so abgesichert sind, dass beim Befüllen der Steueranlage mit Druckluft zunächst die Betriebsbremse, dann die Luftfederung und zuletzt die Feststellbremse in einen betriebsbereiten Zustand überführt werden. Damit ist die Gewähr dafür gegeben, dass die Feststellbremse erst dann gelöst werden kann, wenn zuvor die Luftfederung ordnungsgemäß befüllt worden ist. In Folge der Befüllung ist dann das Niveauregelventil in der Lage, die Luftfederbälge mit Druckluft zu versorgen, um so den Fahrzeugaufbau entsprechend der jeweiligen Beladung in einen betriebsbereiten Zustand unter Erreichung des vorgesehenen Höhenniveaus zu überführen, bevor der Anhänger hinweggefahren werden kann. Damit wird nicht nur erreicht, dass eine Beschädigung der Reifenflanken durch die Kotflügel ausgeschlossen wird. Hinzu kommt noch, dass das in der zu den Luftfederbälgen führenden Leitung ein dem Beladungszustand entsprechender Druck vorherrscht, über den dann auch das ALB-Ventil beeinflusst wird, so dass bei jeder Betriebsbremsung ein an den Beladungszustand angepasster Bremsdruck ausgesteuert wird.

### BESCHREIBUNG DER ERFINDUNG

Bei einer ersten Ausführungsform ist in der zu den Luftfederbälgen führenden Leitung und in der zu den Feststellbremszylinder-Einheiten führenden Leitung je ein Überströmventil angeordnet, wobei das Überströmventil in der zu den Feststellbremszylinder-Einheiten führenden Leitung auf einen vergleichsweise höheren Öffnungsdruck eingestellt ist. Auch damit wird erreicht, dass zunächst die Versorgung der Luftfederung und die Einsteuerung der entsprechenden Balgbrücke erfolgt, bevor die Feststellbremse mit Druckluft versorgt wird, so dass zuletzt das Lösen der Feststellbremse möglich ist. Grundsätzlich können die beiden genannten Überströmventile in verschiedenen Bauarten realisiert werden, d. h. ohne Rückströmung oder mit Rückströmung. Sinnvoll ist es, wenn das in der zu den Feststellbremszylinder-Einheiten führenden Leitung angeordnete Überströmventil als Überströmventil mit begrenzter Rückströmung ausgebildet ist. Damit ergibt sich vorteilhaft die Möglichkeit, auf einen Teil der Luft in der Verbindungsleitung zu den Luftfederbälgen bei Betriebsbremsungen nutzen zu können. Umgekehrt wird das Überströmventil, welches der Luftfederung zugeordnet ist, zweckmäßig als Überströmventil ohne Rückströmung ausgebildet werden. Hier liegt der Gedanke zugrunde, dass der Fahrzeugaufbau während eines Bremsvorganges nicht abgesenkt werden soll.

Nach einer weiteren bevorzugten Ausführungsform ist in der zu den Feststellbremszylinder-Einheiten führenden Leitung ein das Lösen der Federspeicherbremse behinderndes Schaltventil, z. B. Rückschlagventil, mit einer Durchgangs- und einer Sperrstellung angeordnet, das vom Druck in der zu den Luftfederbälgen führenden Leitung in seine Durchgangsstellung schaltbar ist. Damit ist sichergestellt, dass als Voraussetzung ein betriebsbereiter Zustand der Luftfederung gegeben sein muss, um letztendlich nachfolgend die Feststellbremse zu lösen. Je nach der Ausbildung des Schaltventils im Einzelnen, beispielsweise als entsperrbares Rückschlagventil, ergeben sich verschiedene Anordnungsmöglichkeiten in der zu den Feststellbremszylinder-Einheiten führenden Leitungen. Eine dieser Möglichkeiten besteht darin, dass das Schaltventil in der zu den Feststellbremszylinder-Einheiten führenden Leitung zwischen Feststellbremsventil und Feststellbrems-Einheit angeordnet ist. Aber auch die umgekehrte Reihenfolge ist möglich.

Eine andere Möglichkeit der Realisierung der Erfindung besteht darin, dass in der zu den Feststellbremszylinder-Einheiten führenden Leitung ein Zweiwegeventil besonderer Bauart angeordnet ist, welches eingangsseitig mit dem Druck in der zu den Luftfederbälgen führenden Leitung einerseits und mit in der durch das Feststellbremsventil geführten Leitung andererseits verbunden ist und welches infolge seiner besonderen Bauart den jeweils niedrigeren Eingangsdruck weitergibt, also ausgangsseitig an die Federspeicherbremszylinder-Einheiten weitergibt.

Bei der Erfindung ergeben sich auch Möglichkeiten einzelne Elemente der Steueranlage 1 in Baueinheiten zusammenzufassen. Eine vorteilhafte Möglichkeit besteht darin, dass das Überströmventil in der zu den Feststellbremszylinder-Einheiten führenden Leitung und das Feststellbremsventil in einer solchen Baueinheit zusammengefasst sind.

Das erfindungsgemäße Verfahren zum Betreiben einer Steueranlage für Kraftfahrzeuganhänger mit Betriebsbremse, Feststellbremse und Luftfederung kennzeichnet sich erfindungsgemäß dadurch, dass die Betriebsbremse, die Feststellbremse und die Luftfederung gegeneinander so abgesichert werden, dass beim Befüllen der Steueranlage mit Druckluft zunächst die Betriebsbremse, dann die Luftfederung und erst zuletzt die Feststellbremse in einen Betriebsbereiten Zustand überführt werden. Damit ist sichergestellt, dass der Fahrzeugaufbau des Anhängers über die Luftfederung auf ein Sollniveau unabhängig von dem Beladungszustand angehoben ist, bevor die Feststellbremse gelöst und der Anhänger hinweggefahren werden kann.

Vorteilhaft kann der Druck in der zu den Luftfederbälgen führenden Leitung als Steuerdruck zum Ansteuern eines Schaltventils in der zu den Feststellbrems-Zylindern führenden Leitung eingesetzt werden. Auch damit ist sichergestellt, dass die Luftfederung vor der Feststellbremse betriebsbereit ist.

Weiterhin besteht die Möglichkeit, in der zu den Luftfederbälgen führenden Leitung und in der zu den Feststellbremszylinder-Einheiten führenden Leitung je ein Überströmventil anzuordnen, wobei das Überströmventil in der zu den Feststellbremszylinder-Einheiten führenden Leitung auf einen vergleichsweise höheren Öffnungsdruck eingestellt wird, damit zunächst die Luftfederung betriebsbereit ist und erst anschließend die Feststellbremse gelöst werden kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Steueranlage für Kraftfahrzeuganhänger in einer ersten Ausführungs- form.
- **Fig. 2**: zeigt eine Steueranlage für Kraftfahrzeuganhänger in einer zweiten Ausführungs- form.
- **Fig. 3**: zeigt eine Steueranlage für Kraftfahrzeuganhänger in einer dritten Ausführungs- form.

- **Fig. 4**: zeigt eine Steueranlage für Kraftfahrzeuganhänger in einer vierten Ausführungs- form.
- **Fig. 5**: zeigt eine Steueranlage für Kraftfahrzeuganhänger in einer fünften Ausführungs- form.

### FIGURENBESCHREIBUNG

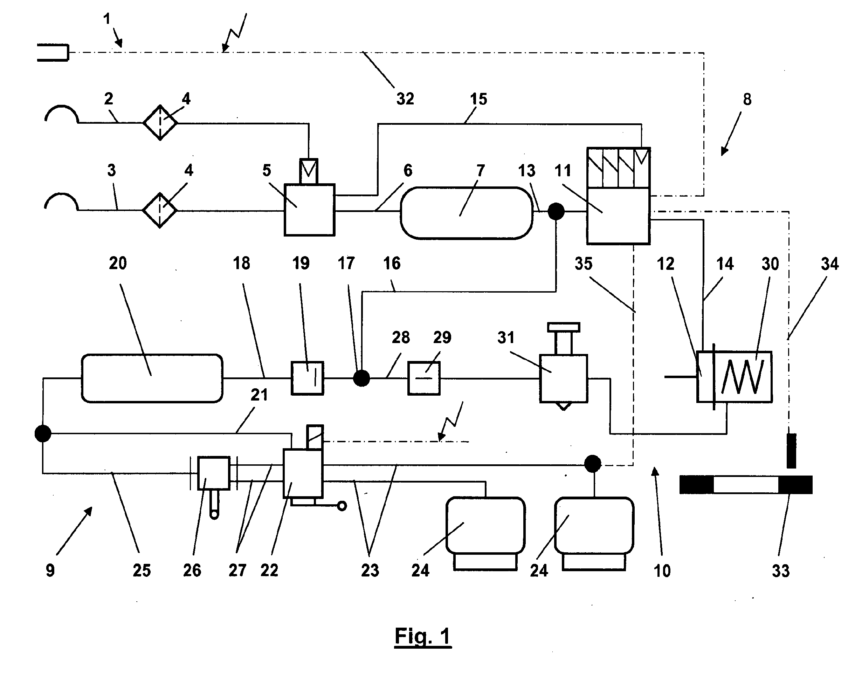

Die in **Fig. 1** dargestellte Steueranlage 1 für einen Kraftfahrzeuganhänger weist, wie üblich, eine Bremsleitung 2 und eine Vorratsleitung 3 auf, die beide mit entsprechenden Kupplungsköpfen schematisch verdeutlicht sind. Sowohl in der Bremsleitung 2 wie auch in der Vorratsleitung 3 können Filterelemente 4 vorgesehen sein. Die Bremsleitung 2 wie auch die Vorratsleitung 3 ist jeweils zu einem Anhängerbremsventil 5 (mit Relaiswirkung) geführt, wobei die Bremsleitung 2 als pneumatische Steuerleitung für die Ansteuerung des Anhängerbremsventils ausgebildet ist. Die über die Vorratsleitung 3 und das Anhängerbremsventil 5, in welchem ein Rückschlagventil verwirklicht sein kann, geführte Vorratsluft, gelangt über eine Leitung 6 in einen Vorratsbehälter 7. Nach diesem Vorratsbehälter 7 ist eine Aufteilung der luftmäßigen Versorgung vorgenommen, und zwar für eine Betriebsbremse 8, eine Luftfederung 9 und eine Feststellbremse 10. Von der Betriebsbremse 8 sind als wesentliche Elemente ein EBS-Steuergerät 11 (mit Relaiswirkung) und ein Betriebsbremszylinder 12 verdeutlicht. Das EBS-Steuergerät 11 wird mit Vorratsluft aus dem Vorratsbehälter 7 über eine Leitung 13 versorgt. Eine Leitung 14 verbindet das EBS-Steuergerät 11 mit dem Betriebsbremszylinder 12. Von dem Anhängerbremsventil 5 führt eine Leitung 15 als Steuerleitung zu dem EBS-Steuergerät 11, wobei hier die pneumatische Ansteuerung der Betriebsbremse initiiert wird. Es versteht sich, dass das EBS-Steuergerät auch elektrisch ansteuerbar bzw. mit Signalen verbindbar ist. Dies ist nur schematisch angedeutet.

Von der Leitung 13 zweigt eine Leitung 16 ab, die zu einem Verzweigungspunkt 17 führt, von dem ausgehend die Luftfederung 9 einerseits und die Feststellbremse 10 andererseits abzweigen. So führt von dem Verzweigungspunkt 17 eine Leitung 18, in der ein Überströmventil 19 (ohne Rückströmung) angeordnet ist, zu einem Vorratsbehälter 20, der der Druckluftversorgung der Luftfederung 9 dient. Das Überströmventil 19 kann als solches ein Überströmventil ohne Rückströmung sein, was dazu führt, dass alle übergeströmte Luft der Luftfederung 9 zugute kommt. Andererseits ist es aber auch möglich, das Überströmventil 19 als Überströmventil mit begrenzter Rückströmung auszubilden, um einen Teil der Luft auch für die Versorgung der Betriebsbremse 8 nutzen können. Von der Leitung 18 bzw. dem Vorratsbehälter 20 zweigt eine Leitung 21 ab, die zu einem Hebe- und Senkventil 22 führt, welches für eine manuelle Betätigung ausgebildet ist, andererseits aber auch elektrisch angesteuert werden kann. Von dem Hebe- und Senkventil 22 führen entsprechende Leitungen 23 zu Luftfederbälgen 24 der linken und rechten Anhängerseite, wobei hier zur Vereinfachung nur zwei Luftfederbälge 24 an einer Achse dargestellt sind. Aus dem Vorratsbehälter 20 wird nicht nur das Hebe- und Senkventil 22 mit Druckluft versorgt, sondern über eine Leitung 25 auch ein Niveauregelventil 26. Das Niveauregelventil 26 dient wie üblich der Aufrechterhaltung eines bestimmungsgemäßen Abstands zwischen dem Fahrzeugaufbau und den Achsen und ist damit zur Be- und Entlüftung der Luftfederbälge 24 ausgebildet. Zu diesem Zweck führen Leitungen 27 zu dem Hebe- und Senkventil 22 und dann weiter über die Leitungen 23 zu den Luftfederbälgen 24. Das Niveauregelventil 26 nimmt bei Einnahme der vorher bestimmten Höhe des Fahrzeugaufbaus eine Abschlussstellung ein, in der sein Einlassventil und Auslassventil beide gleichzeitig geschlossen sind. Wesentliche Elemente der Luftfederung 9 sind damit das Niveauregelventil 26 sowie die Luftfederbälge 24.

Von dem Verzweigungspunkt 17 zweigt schließlich als dritter Teil der Steueranlage 1 für den Kraftfahrzeuganhänger die Feststellbremse 10 ab. Es ist eine Leitung 28 vorgesehen, in der ein Überströmventil 29 (mit Rückströmung) angeordnet ist und die letztendlich zu einer Feststellbremszylinder-Einheit 30 führt. Die Feststellbremszylinder-Einheit 30 kann mit dem Betriebsbremszylinder 12 in Form eines so genannten kombinierten Federspeicherbremszylinders verwirklicht sein. Aber auch separate Einheiten sind möglich. Als weiteres wesentliches Element ist in der Leitung 28 ein Feststellbremsventil 31 angeordnet, welches manuell betätigbar ist, oft auch als Parkventil bezeichnet wird und zwei Stellungen besitzt, nämlich eine Durchgangsstellung und eine Entlüftungsstellung. Das Feststellbremsventil 31 weist insoweit eine eigene Entlüftung auf. Als weiteres Element kann in der Leitung 28 ein Vorratsbehälter (nicht dargestellt) vorgesehen sein. Im Allgemeinen ist die Anordnung eines Vorratsbehälters in der Feststellbremse 10 jedoch nicht erforderlich.

Eines der oder beide Überströmventile 19 und 29 können auch durch Magnetventile mit einer Durchgangs- und einer Sperrstellung ersetzt sein, die von dem EBS-Steuergerät 11 elektrisch angesteuert werden. Schließlich können diese Magnetventile auch in dem EBS-Steuergerät 11 integriert angeordnet sein, so dass die Leitungen 18 und 28 von dem EBS-Steuergerät 11 ausgehen.

Die elektrische Versorgung des EBS-Steuergeräts 11 erfolgt über eine elektrische Leitung 32. Weiterhin ist ein Radsensor 33 angedeutet, von dem über eine elektrische Leitung 34 ein entsprechendes Signal an das EBS-Steuergerät 11 gegeben wird. Eine Leitung 35 verbindet einen Luftfederbalg 24 mit dem EBS-Steuergerät 11. Es wird hier der Druck in dem Luftfederbalg 24 abgetastet und dem EBS-Steuergerät 11 zugeführt. Zu diesem Zweck kann die Leitung 35 als pneumatische Leitung ausgebildet sein, wobei dann der Drucksensor im EBS-Steuergerät 11 angeordnet ist. Die Leitung 35 kann auch als elektrische Leitung ausgebildet sein, wenn der Drucksensor in bzw. an dem Luftfederbalg 24 angeordnet ist.

Die beiden dem Vorratsbehälter 7 nachgeschalteten Überströmventile 19 und 29 sind auf unterschiedliche Öffnungsdrücke eingestellt, und zwar so, dass das Überströmventil 19 einen geringer eingestellten Öffnungsdruck aufweist als das Überströmventil 29.

Die Funktion der Steueranlage läuft wie folgt ab:
Ausgehend von dem drucklosen Zustand werden die Kupplungsköpfe des Anhängers mit den Kupplungsköpfen des Zugfahrzeugs verbunden, also sowohl die Vorratsleitung 3 wie auch die Bremsleitung 2 angekuppelt. Daraufhin strömt Druckluft von dem Zugfahrzeug über die Vorratsleitung 3 zum Anhängerbremsventil 5 und weiter über die Leitung 6 in den Vorratsbehälter 7.
Die beiden Überströmventile 19 und 29 sind noch geschlossen, da das Druckniveau ihre Öffnungsdrücke unterschreitet. Mit steigendem Luftdruck im Vorratsbehälter 7 wird die Betriebsbremse 8 betätigbar, d. h. bei Auslösung einer Bremsung im Zugfahrzeug gelangt Druckluft über die Bremsleitung 2 zum Anhängerbremsventil 5. Infolge der Relaiswirkung des Anhängerbremsventils 5 wird ein Steuerimpuls über die Leitung 15 zu dem EBS-Steuergerät 11 geschickt und die entsprechende Betriebsbremsung am Betriebsbremszylinder 12 ausgelöst. Jedenfalls kann dies geschehen, da die Betriebsbremse 8 bremsbereit ist. Mit weiter steigendem Druck öffnet das Überströmventil 19, während das Überströmventil 29 noch geschlossen ist. Damit gelangt Druckluft in den Vorratsbehälter 20 der Luftfederung, so dass das Niveauregelventil 26 Druckluft in die Luftfederbälge 24 schickt, so dass der Fahrzeugaufbau in die vorgesehene Normallage über den Achsen angehoben wird. Bei weiter steigendem Druck öffnet schließlich das Überströmventil 29, so dass Druckluft an dem Feststellbremsventil 31 anliegt. Erst jetzt ist eine Betätigung des Feststellbremsventils 31 möglich, indem der entsprechende Druck als Lösedruck zu der Feststellbremszylinder-Einheit 30 geleitete wird und damit die Feststellbremse 10 gelöst werden kann. Das Fahrzeug mit dem Kraftfahrzeuganhänger kann sodann seine Fahrt beginnen bzw. hinweggefahren werden.

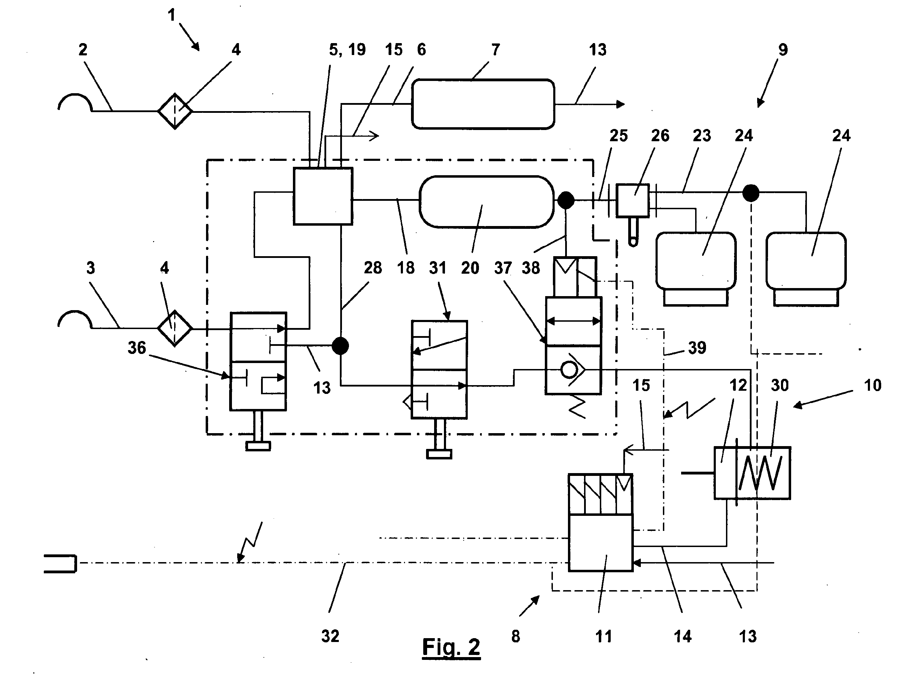

**Fig. 2** zeigt eine weitere Ausführungsmöglichkeit der Steueranlage 1, die in verschiedener Hinsicht auf der Ausführungsform der Fig. 1 aufbaut, weshalb hierauf verwiesen werden kann. Abweichend dazu, ist das Anhängerbremsventil 5 etwas abgeändert, d. h. es besitzt keine Relaiswirkung. Freilich besitzt es eine Notbremseinheit und es nimmt auch das Überströmventil 19 auf, so dass die Verzweigung in die Betriebsbremse 8, die Luftfederung 9 und die Feststellbremse 10 hier ausgehend an dem Anhängerbremsventil 5 verwirklicht ist. Das Überströmventil 29 kann im Anhängerbremsventil 5 angeordnet sein oder auch entfallen.

In der Vorratsleitung 3, die zum Anhängerbremsventil 5 führt, ist ein Löseventil 36 vorgesehen, welches ebenso wie auch das Feststellbremsventil 31 manuell betätigbar ausgebildet ist und die beiden dargestellten Stellungen aufweist. In der einen Stellung besteht Durchgang in der Vorratsleitung 3. In der anderen Stellung wird Vorratsdruck aus dem Vorratsbehälter 7, über die Leitung 13 anstehend, zum Anhängerbremsventil 5 geschickt, während die vom Kupplungskopf her kommende Vorratsleitung 3 abgesperrt ist.

In der Leitung 28, die hier von dem Anhängerbremsventil 5 ausgehend über das Feststellbremsventil 31 zu der Feststellbremszylinder-Einheit 31 führt, ist hier ein Schaltventil 37 angeordnet, welches die beiden dargestellten Stellungen besitzt und auch die Funktion des Überströmventils 29 erfüllt. In der einen Stellung ist Durchgang in der Leitung 28 hergestellt, während in der anderen Stellung eine Belüftung der Feststellbremszylinder-Einheit 30 nicht möglich ist, dagegen eine Entlüftung über das Rückschlagventil im Schaltventil 37 und das Feststellbremsventil 31 zugelassen wird. Das Schaltventil 37 kann auch als entsperrbares Rückschlagventil bezeichnet werden. Es wird gegen den Druck einer Feder pneumatisch angesteuert, und zwar über eine Leitung 38, die Verbindung zu der Leitung 25, d. h. zur Luftfederung 9, hat. Damit ist der Druck in der Luftfederung 9 bestimmend dafür, welche Stellung das Schaltventil 37 einnimmt. Nur ein ausreichender Druck in der Luftfederung 9 führt dazu, dass die Durchgangsstellung eingenommen wird und damit die Feststellbremse 10 gelöst werden kann. Das Schaltventil 37 kann zusätzlich oder anstatt der pneumatischen Ansteuerung über die Leitung 38 auch elektrisch ansteuerbar sein, und zwar über eine elektrische Steuerleitung 39, die von dem EBS-Steuergerät 11 zu dem Schaltventil 37 geführt ist. Ein Signal für eine Bremsung wird über die Leitung 15 übertragen, die von dem Anhängerbremsventil 5 abzweigt und zu dem EBS-Steuergerät 11 geführt ist.

Auch mit dieser Steueranlage wird die Reihenfolge der Betriebsbereitschaft der Betriebsbremse 8, der Luftfederung 9 und der Feststellbremse 10 in der angegebenen Reihenfolge verwirklicht. Bei dieser Steueranlage ist das Schaltventil 37 im Wesentlichen dafür verantwortlich, dass das Lösen der Feststellbremse 10 erst dann erfolgen kann, wenn zuvor die Luftfederung 9 ordnungsgemäß aufgefüllt, d. h. die Luftfederbälge 24 mit dem zugehörigen Druck versorgt worden sind.

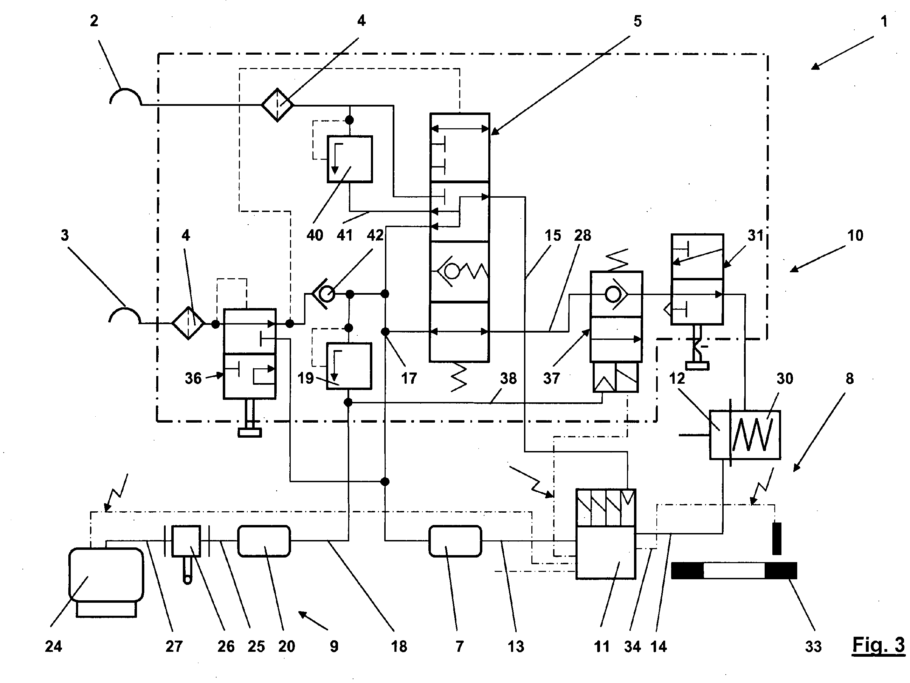

Auch die Ausführungsform der Steueranlage 1 gemäß **Fig. 3** enthält verschiedene Elemente, die zuvor bereits beschrieben worden sind. Das Anhängerbremsventil 5 ist hier so ausgebildet, wie es ähnlich in Fig. 2 bereits dargestellt ist. Es besitzt auf jeden Fall eine Notbremseinheit und ein entsperrbares Rückschlagventil. Es sind vier Stellungen schematisch dargestellt, von denen jeweils zwei miteinander gekoppelt sind. In der obersten dargestellten Stellung, nämlich der Durchgangsstellung, ist die Bremsleitung 2 über die Leitung 15 mit dem EBS-Steuergerät 11 verbunden, während gleichzeitig die vom Verzweigungspunkt 17 ausgehende Leitung 28 so geschaltet ist, dass in Strömungsrichtung ein Rückschlagventil überströmt wird. In der anderen Stellung ist die zweite und vierte Stellung gleichzeitig eingenommen, so dass sämtliche Leitungsanschlüsse, ausgenommen die Bremsleitung 2, jeweils miteinander verbunden sind.

Es ist weiterhin ein Überströmventil 40 vorgesehen, welches in einer Leitung 41 angeordnet ist, die von der Bremsleitung 2 zu dem Anhängerbremsventil 5 führt. In der Vorratsleitung 3 ist ein Rückschlagventil 42 angeordnet.

Auch hier ist in der Leitung 28 zu der Feststellbremszylinder-Einheit 30 das aus Fig. 2 bekannte Schaltventil 37 angeordnet, welches wie dargestellt pneumatisch und/oder elektrisch umsteuerbar bzw. ansteuerbar ausgebildet ist. Die pneumatische Ansteuerung erfolgt über die Leitung 38, die Verbindung zur Leitung 18 bzw. 25 hat. In der Leitung 28 ist weiterhin auch das Feststellbremsventil 31 angeordnet, welches manuell in die beiden dargestellten Stellungen überführt werden kann, wie es für Rangierzwecke erforderlich ist. Fig. 3 zeigt im Vergleich zu Fig. 2, dass die Reihenfolge der Anordnung des Feststellbremsventils 31 und des Schaltventils 37 in der Leitung 28 auch umgekehrt werden kann. Die in den Fig. 2 und 3 strichpunktiert umrundeten Elemente können zu je einer Baueinheit zusammengefasst sein.

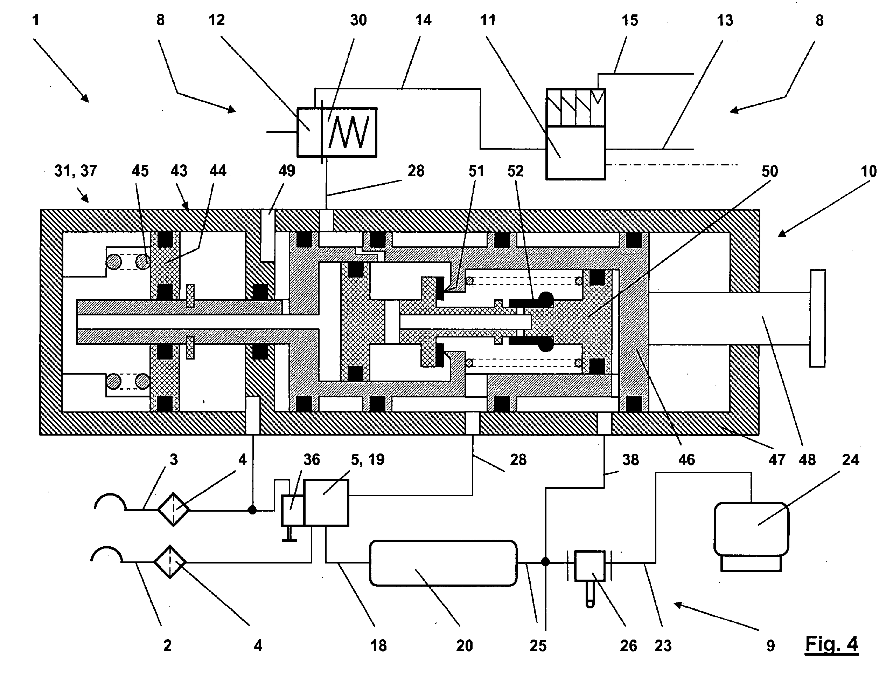

**Fig. 4** zeigt eine weitere Ausführungsform der Steueranlage 1, wobei es hier bevorzugt darauf ankommt, ein kombiniertes Ventil in seinem Aufbau darzustellen, welches die Funktion des Feststellbremsventils 31 und des Schaltventils 37 zusammenfasst und welches zusätzlich noch eine Notbremseinrichtung 43 aufweist. Dieses kombinierte Ventil ist, wie ersichtlich, in der Leitung 28 zu den Feststellbremszylinder-Einheiten 30 angeordnet, die von dem Anhängerbremsventil 5 zu den Feststellbremszylinder-Einheiten 30 führt. Die Notbremseinrichtung 43 dieses Ventils besitzt einen Notbremskolben 44, der eine entsprechend bemessene Notbremsfeder 45 vorspannt, sobald die Vorratsleitung 3 gekuppelt wird, so dass Druckluft auf den Notbremskolben 44 in der dargestellten Weise gelangt. Das kombinierte Ventil 31, 37 ist nach Schieberbauart aufgebaut und weist einen Schieber 46 auf, der manuell betätigbar ist. Der Schieber 46 ist gleitend und dichtend in einem Gehäuse 47 gelagert und besitzt die dargestellten Dichtungen. Man erkennt, dass durch Herausziehen eines Handgriffs 48 aus der dargestellten Stellung nach rechts die Leitung 28 von der Feststellbremszylinder-Einheit 30 an eine Entlüftungsöffnung 49 angeschlossen wird, so dass die Feststellbremse 10 damit eingelegt wird. Diese Stellung wird auch erreicht, wenn die Vorratsleitung 3 abgekuppelt wird oder abreißt, so dass ein entsprechender Druckverlust am Notbremskolben 44 dazu führt, dass die Notbremsfeder 45 die Verschiebung des Schiebers 46 ausführt. Innerhalb des Schiebers 46 ist ein Steuerkolben 50 verschiebbar gelagert, der über die Leitung 38 beaufschlagt werden kann, die von der Luftfederung 9 bzw. dem Vorratsbehälter 20 abzweigt. Der Steuerkolben 50 besitzt einen Einlasssitz 51, der mit einer Ventilplatte ein öffenbares Einlassventil bildet, sobald der Steuerkolben 50 über die Leitung 38 entsprechend beaufschlagt wird. Damit wird dann der Durchgang in der Leitung 28 bereitgestellt, so dass zuletzt das Lösen der Feststellbremse 10 möglich ist. Der Steuerkolben 50 trägt an der dargestellten Stelle ein Rückschlagventil 52, welches einen Druckausgleich zwischen einem höheren Druck im Kreis der Feststellbremse 10 und einen vergleichsweise niedrigeren Druck im Kreis der Betriebsbremse 8 zulässt. Bei einem Bruch der Leitung 28 wird die Feststellbremszylinder-Einheit 30 entlüftet und damit die Feststellbremse 10 wirksam.

Auch hier ist die Funktion der Steueranlage 1 gemäß Fig. 4 so, wie es zuvor anhand der anderen Ausführungsbeispiele beschrieben worden ist. Zunächst wird die Betriebsbremse 8, von der relativ wenig dargestellt ist, in einen betätigungsbereiten Zustand versetzt. Anschließend wird der Vorratsbehälter 20 der Luftfederung 9 über das Überströmventil 19 in dem Anhängerbremsventil 5 aufgefüllt. Schließlich öffnet dieser steigende Druck in der Leitung 38 das Einlassventil innerhalb des kombinierten Ventils im Bereich des Einlasssitzes 51, so dass die Feststellbremse 10 gelöst wird.

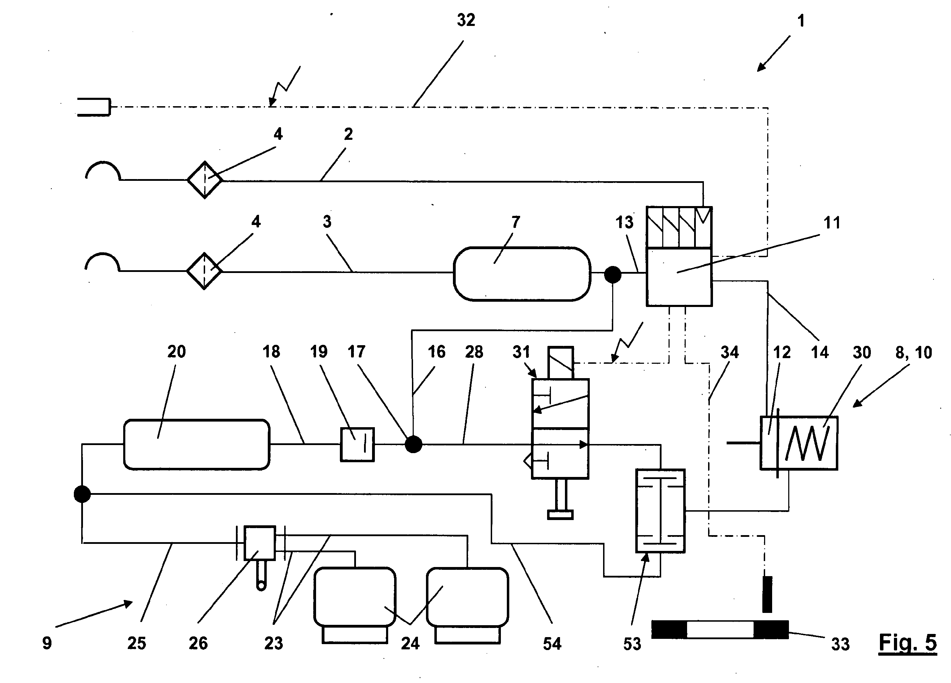

**Fig. 5** zeigt eine weitere Ausführungsmöglichkeit der Steueranlage 1, die auch einige Elemente aufweist, wie sie zuvor bereits beschrieben worden sind. So ist beispielsweise die Luftfederung 9 ähnlich ausgebildet, wie dies anhand von Fig. 1 oder auch Fig. 3 bereits beschrieben wurde. Anders ist die Ausbildung der Feststellbremse 10. Vom Verzweigungspunkt 17 zweigt die Leitung 28 ab, in der zunächst einmal das Feststellbremsventil 31 mit seinen beiden Stellungen angeordnet ist. Das Feststellbremsventil 31 ist hier manuell und auch elektrisch ansteuerbar, letzteres über die EBS-Steuergerät 11. Es versteht sich, dass auch bei den anderen Ausführungsformen die elektrische Ansteuerung des Feststellbremsventils 31 verwirklicht werden kann.

In der Leitung 28, die letztendlich zu der Feststellbremszylinder-Einheit 30 führt, ist jedoch ein Zweiwegeventil 53 angeordnet. Das Zweiwegeventil 53 ist von besonderer Bauart. Es weist zwei Eingangsanschlüsse und einen Ausgangsanschluss auf und ist so ausgebildet, dass es den jeweils niedrigeren Eingangsdruck ausgangsseitig an die Feststellbremszylinder-Einheit 30 weiterleitet. Der eine Eingang des Zweiwegeventils 53 ist mit der ankommenden Leitung 28 verbunden. Der andere Eingang hat Anschluss über eine Leitung 54, die in Verbindung mit dem Vorratsbehälter 20 der Luftfederung 9 bzw. der Leitung 25 steht. Auch damit wird sichergestellt, dass die Feststellbremse 10 erst dann gelöst werden kann, wenn zuvor die Luftfederung 9 ordnungsgemäß aufgefüllt und in Betriebsbereitschaft gesetzt ist. Erst dann stellt das Zweiwegeventil 53 die Verbindung zur Leitung 28 und damit die Entlüftungsmöglichkeit über das Feststellbremsventil 31 wirksam zur Verfügung, so dass bei der Betätigung die Feststellbremszylinder-Einheit 30 belüftet werden kann.

Es fällt auf, dass in der Steueranlage 1 gemäß Fig. 5 kein Anhängerbremsventil 5 vorgesehen ist, nicht einmal eine ausgeprägte Notbremseinrichtung. Dennoch stellt sich infolge der besonderen Bauart des Zweiwegeventils 53 beim Abkuppeln der Vorratsleitung 3 oder bei einem Abriss derselben eine Notbremswirkung ein, wenn der Vorratsbehälter 7 und die Leitungen 16 und 28 entlüftet werden, so dass die Feststellbremse 10 einfällt.

### BEZUGSZEICHENLISTE

- 1: Steueranlage
- 2: Bremsleitung
- 3: Vorratsleitung
- 4: Filterelement
- 5: Anhängerbremsventil
- 6: Leitung
- 7: Vorratsbehälter
- 8: Betriebsbremse
- 9: Luftfederung
- 10: Feststellbremse
- 11: EBS-Steuergerät
- 12: Betriebsbremszylinder
- 13: Leitung
- 14: Leitung
- 15: Leitung
- 16: Leitung
- 17: Verzweigungspunkt
- 18: Leitung
- 19: Überströmventil
- 20: Vorratsbehälter
- 21: Leitung
- 22: Hebe- und Senkventil
- 23: Leitung
- 24: Luftfederbalg
- 25: Leitung
- 26: Niveauregelventil
- 27: Leitung
- 28: Leitung
- 29: Überströmventil
- 30: Feststellbremszylinder-Einheit
- 31: Feststellbremsventil
- 32: elektrische Leitung
- 33: Radsensor
- 34: elektrische Leitung
- 35: Leitung
- 36: Löseventil
- 37: Schaltventil
- 38: Leitung
- 39: elektrische Steuerleitung
- 40: Überströmventil
- 41: Leitung
- 42: Rückschlagventil
- 43: Notbremseinrichtung
- 44: Notbremskolben
- 45: Notbremsfeder
- 46: Schieber
- 47: Gehäuse
- 48: Handgriff
- 49: Entlüftungsöffnung
- 50: Steuerkolben
- 51: Einlasssitz
- 52: Rückschlagventil
- 53: Zweiwegeventil
- 54: Leitung

## Patentansprüche

1. Steueranlage (1) für Kraftfahrzeug-Anhänger mit Betriebsbremse (8), Feststellbremse (10) und Luftfederung (9), wobei die Betriebsbremse (8) ein Steuerventil und Betriebsbremszylinder (12), die Feststellbremse (10) ein Feststellbremsventil (31) und Feststellbremszylinder-Einheiten (30) und die Luftfederung (9) ein Niveauregelventil (26) und Luftfederbälge (24) aufweist, **dadurch gekennzeichnet, dass** die Betriebsbremse (8), die Feststellbremse (10) und die Luftfederung (9) gegeneinander so abgesichert sind, dass beim Befüllen der Steueranlage mit Druckluft zunächst die Betriebsbremse (8), dann die Luftfederung (9) und zuletzt die Feststellbremse (10) in einen betriebsbereiten Zustand überführt werden.

2. Steueranlage (1) nach Anspruch 1, **dadurch gekennzeichnet, dass** in der zu den Luftfederbälgen (24) führenden Leitung (18, 23) und in der zu den Feststellbremszylinder-Einheiten (30) führenden Leitung (28) je ein Überströmventil (19, 29) angeordnet sind, wobei das Überströmventil (29) in der zu den Feststellbremszylinder-Einheiten (30) führenden Leitung (28) auf einen vergleichsweise höheren Öffnungsdruck eingestellt ist.

3. Steueranlage (1) nach Anspruch 2, **dadurch gekennzeichnet, dass** das Überströmventil (29) in der zu den Feststellbremszylinder-Einheiten (30) führenden Leitung (28) als Überströmventil mit begrenzter Rückströmung ausgebildet ist.

4. Steueranlage (1) nach Anspruch 1, **dadurch gekennzeichnet, dass** in der zu den Feststellbremszylinder-Einheiten (30) führenden Leitung (28) ein das Lösen der Feststellbremszylinder-Einheiten behinderndes Schaltventil (37) mit einer Durchgangs- und einer Sperrstellung, z. B. Rückschlagventil, angeordnet ist, das vom Druck in der zu den Luftfederbälgen (24) führenden Leitung (25) in seine Durchgangsstellung schaltbar ist.

5. Steueranlage (1) nach Anspruch 4, **dadurch gekennzeichnet, dass** das Schaltventil (37) in der zu den Feststellbremszylinder-Einheiten (30) führenden Leitung (28) zwischen dem Feststellbremsventil (31) und den Feststellbremszylinder-Einheiten (30) angeordnet ist.

6. Steueranlage (1) nach Anspruch 1, **dadurch gekennzeichnet, dass** in der zu den Feststellbremszylinder-Einheiten (30) führenden Leitung (28) ein Zweiwegeventil (53) angeordnet ist, das eingangsseitig mit dem Druck in der zu den Luftfederbälgen (24) führenden Leitung (25) einerseits und mit dem Feststellbremsventil (31) andererseits verbunden ist und das den jeweils niedrigerem Eingangsdruck weitergibt.

7. Steueranlage (1) nach Anspruch 1, 2 und 4, **dadurch gekennzeichnet, dass** das Überströmventil (29) in der zu den Feststellbremszylinder-Einheiten (30) führenden Leitung (28) und das Feststellbremsventil (31) in einer Baueinheit zusammengefasst sind.

8. Verfahren zum Betreiben einer Steueranlage (1) für Kraftfahrzeug-Anhänger mit Betriebsbremse (8), Feststellbremse (10) und Luftfederung (9), wobei die Betriebsbremse (8) ein Steuerventil und Betriebsbremszylinder (12), die Feststellbremse (10) ein Feststellbremsventil (31) und Feststellbremszylinder-Einheiten (30) und die Luftfederung (9) ein Niveauregelventil (26) und Luftfederbälge (24) aufweist, indem zumindest ein Vorratsbehälter (7) auf dem Anhänger über eine Vorratsleitung (3) bei Bedarf mit Druckluft aufgefüllt wird, aus dem die Betriebsbremse (8), die Feststellbremse (10) und die Luftfederung (9) gespeist werden, **dadurch gekennzeichnet, dass** die Betriebsbremse (8), die Feststellbremse (10) und die Luftfederung (9) gegeneinander so abgesichert sind, dass beim Befüllen der Steueranlage (1) mit Druckluft zunächst die Betriebsbremse (8), dann die Luftfederung (9) und zuletzt die Feststellbremse (10) in einen betriebsbereiten Zustand überführt werden.

9. Verfahren nach Anspruch 8, **dadurch gekennzeichnet, dass** der Druck in der zu den Luftfederbälgen (24) führenden Leitung (25) als Steuerdruck zum Ansteuern eines Schaltventils (37) in der zu den Feststellbremszylinder-Einheiten (30) eingesetzt wird.

10. Verfahren nach Anspruch 8, **dadurch gekennzeichnet, dass** in der zu den Luftfederbälgen (24) führenden Leitung (25) und in der zu den Feststellbremszylinder-Einheiten (30) führenden Leitung (28) je ein Überströmventil (19, 29) angeordnet sind, wobei das Überströmventil (29) in der zu den Feststellbremszylinder-Einheiten (30) führenden Leitung (28) auf einen vergleichsweise höheren Öffnungsdruck eingestellt wird.

## Claims

1. Control device (1) for a trailer of a motor vehicle comprising a service brake (8), a parking brake (10) and an air suspension (9), wherein the service brake (8) comprises a control valve and service brake cylinders (12, the parking brake (10) comprises a parking brake valve (31) and parking brake cylinder units (30) and the air suspension (9) comprises a level control valve (26) and air suspension bellows (24), **characterised by** the service brake (8), the parking brake (10) and the air suspension (9) being secured or protected against each other such that during the filling process of the control device with pressurized air first the service brake (8), then the air suspension (9) and at last the parking brake (10) are transferred in a state ready for operation.

2. Control device (1) according to claim 1, wherein both in a conduit (18, 23) to the air suspension bellows (24) as well as in a conduit (28) to the parking brake cylinder units (30) a protection valve or overflow valve (19, 29) is located, wherein the protection valve (29) in the conduit (28) leading to the parking brake cylinder units (30) is adapted for having a larger opening pressure.

3. Control device (1) of claim 2, wherein the protection valve (29) in the conduit (28) leading to the parking brake cylinder units (30) is a protection valve or overflow valve with limited backflow.

4. Control system (1) of claim 1, wherein a switching valve (37) blocking the deactivation of the parking brake cylinder units and having an open and a closed state, e.g. a check valve, is positioned in the conduit (28) leading to the parking brake cylinder units (30), wherein the switching valve (37) is switched by pressure in the conduit (25) leading to the air suspension bellows (24) into the open state.

5. Control system (1) of claim 4, wherein the switching valve (37) in the conduit (28) leading to the parking brake cylinder units (30) is located between the parking brake valve (31) and the parking brake cylinder units (30).

6. Control system (1) of claim 1, wherein a two-port valve (53) is located in the conduit (28) leading to the parking brake cylinder units (30), an input being connected with the pressure in the conduit (25) leading to the air suspension bellows (24) as well as with the parking brake valve (31), the two-port-valve (53) transferring the respective lower incoming pressure.

7. Control device (1) of one of claims 1, 2 and 4, wherein the protection valve (29) in the conduit (28) leading to the parking brake cylinder units (30) and the parking brake valve (31) are integrated into a unit.

8. Method for the operation of a control system (1) of a trailer of a motor vehicle comprising a service brake (8), a parking brake (10) and an air suspension (9), wherein the service brake (8) comprises a control valve and service brake cylinders (12), the parking brake (10) comprises a parking brake valve (31) and parking brake cylinder units (30) and the air suspension (9) comprises a level control valve (26) and air suspension bellows (24), at least one reservoir (7) of the trailer being filled via a supply conduit (3) with pressurized air if necessary, said reservoir (7) supplying the service brake (8), the parking brake (10) and the air suspension (9) with pressurized air, **characterised by** the service brake (8), the parking brake (10) and the air suspension (9) being secured or protected against each other such that when filling the control device (1) with pressurized air first the service brake (8), then the air suspension (9) and at last the parking brake (10) are transferred into a state ready for operation.

9. Method of claim 8, wherein the pressure in a conduit (25) leading to the air suspension bellows (24) is used as a control or pilot pressure for controlling a switching valve (37) in the conduit (28) leading to the parking brake cylinder units (30).

10. Method of claim 8, wherein both in the conduit (25) leading to the air suspension bellows (24) as well as in the conduit (28) leading to the parking brake cylinder units (30) a protection valve or overflow valve (19, 29) is located wherein the protection or overflow valve (29) located in the conduit (28) leading to the parking brake cylinder units (30) is adapted to have a larger opening pressure.

## Revendications

1. Installation de commande (1) pour remorques de véhicules à moteur, comportant un frein de service (8), un frein de stationnement (10) et une suspension pneumatique (9), sachant que le frein de service (8) comporte une valve de commande et des cylindres de frein (12), le frein de stationnement (10) comporte une valve (31) et des unités de cylindres de frein (30), et la suspension pneumatique (9) comporte une valve de nivellement (26) et des soufflets (24), **caractérisée en ce que** le frein de service (8), le frein de stationnement (10) et la suspension pneumatique (9) sont protégés les uns par rapport aux autres de telle sorte que, lors du remplissage de l'installation de commande avec de l'air comprimé, le frein de service (8) en premier, puis la suspension pneumatique (9) et finalement le frein de stationnement (10) sont amenés dans un état prêt à fonctionner.

2. Installation de commande (1) selon la revendication 1, **caractérisée en ce que** dans la conduite (18, 23) menant vers les soufflets (24) de la suspension pneumatique et dans la conduite (28) menant vers les unités de cylindres de frein (30) du frein de stationnement est montée respectivement une vanne de trop-plein (19, 29), sachant que la vanne de trop-plein (29) dans la conduite (28) menant vers les unités de cylindres de frein (30) du frein de stationnement est réglée à une pression d'ouverture relativement plus élevée.

3. Installation de commande (1) selon la revendication 2, **caractérisée en ce que** la vanne de trop-plein (29) dans la conduite (28) menant vers les unités de cylindres de frein (30) du frein de stationnement est réalisée sous la forme d'une vanne de trop-plein avec un flux de retour limité.

4. Installation de commande (1) selon la revendication 1, **caractérisée en ce que** dans la conduite (28) menant vers les unités de cylindres de frein (30) du frein de stationnement est disposée une vanne de commande (37) avec une position de passage et une position d'arrêt, par exemple un clapet anti-retour, qui empêche le déclenchement des unités de cylindres de frein du frein de stationnement et qui peut être commandée dans sa position de passage par la pression régnant dans la conduite (25) menant vers les soufflets (24) de la suspension pneumatique.

5. Installation de commande (1) selon la revendication 4, **caractérisée en ce que** la vanne de commande (37) dans la conduite (28) menant vers les unités de cylindres de frein (30) du frein de stationnement est disposée entre la valve (31) du frein de stationnement et les unités de cylindres de frein (30) du frein de stationnement.

6. Installation de commande (1) selon la revendication 1, **caractérisée en ce que** dans la conduite (28) menant vers les unités de cylindres de frein (30) du frein de stationnement est disposée une vanne à deux voies (53), qui, du côté entrée, est reliée, d'une part, à la pression dans la conduite (25) menant vers les soufflets (24) de la suspension pneumatique et, d'autre part, à la valve (31) du frein de stationnement et qui transmet la pression d'entrée plus faible dans chaque cas.

7. Installation de commande (1) selon les revendications 1, 2 et 4, **caractérisée en ce que** la vanne de trop-plein (29) dans la conduite (28) menant vers les unités de cylindres de frein (30) du frein de stationnement et la valve (31) du frein de stationnement sont regroupées en un module.

8. Procédé d'exploitation d'une installation de commande (1) pour remorques de véhicules à moteur, comportant un frein de service (8), un frein de stationnement (10) et une suspension pneumatique (9), sachant que le frein de service (8) comporte une valve de commande et des cylindres de frein (12), le frein de stationnement (10) comporte une valve (31) et des unités de cylindres de frein (30), et la suspension pneumatique (9) comporte une valve de nivellement (26) et des soufflets (24), dans lequel procédé au moins un réservoir de stockage (7) sur la remorque est rempli, en cas de besoin, avec de l'air comprimé via une conduite de stockage (3), et à partir duquel réservoir sont alimentés le frein de service (8), le frein de stationnement (10) et la suspension pneumatique (9), **caractérisé en ce que** le frein de service (8), le frein de stationnement (10) et la suspension pneumatique (9) sont protégés les uns par rapport aux autres de telle sorte que, lors du remplissage de l'installation de commande (1) avec de l'air comprimé, le frein de service (8) en premier, puis la suspension pneumatique (9) et finalement le frein de stationnement (10) sont amenés dans un état prêt à fonctionner.

9. Procédé selon la revendication 8, **caractérisé en ce que** la pression dans la conduite (25) menant vers les soufflets (24) de la suspension pneumatique est utilisée comme pression de commande pour actionner une vanne de commande (37) dans la conduite (28) menant vers les unités de cylindres de frein (30) du frein de stationnement.

10. Procédé selon la revendication 8, **caractérisé en ce que** dans la conduite (25) menant vers les soufflets (24) de la suspension pneumatique et dans la conduite (28) menant vers les unités de cylindres de frein (30) du frein de stationnement est montée respectivement une vanne de trop-plein (19, 29), sachant que la vanne de trop-plein (29) dans la conduite (28) menant vers les unités de cylindres de frein (30) du frein de stationnement est réglée à une pression d'ouverture relativement plus élevée.
